# EUROPÄISCHE PATENTSCHRIFT

(11) **EP 2 828 205 B1**
(45) Veröffentlichungstag und Bekanntmachung des Hinweises auf die Patenterteilung: **09.12.2015**
(21) Anmeldenummer: 13715627.9
(22) Anmeldetag: 20.03.2013
(51) Int. Cl.: C02F 1/28, C02F 1/52, C02F 1/70, C02F 1/72, C02F 101/00

(54) **VERFAHREN ZUR ENTFERNUNG RADIOAKTIVER VERUNREINIGUNGEN AUS ABWÄSSERN**
PROCESS FOR REMOVAL OF RADIOACTIVE CONTAMINATION FROM WASTEWATER
PROCÉDÉ POUR ÉLIMINER DES POLLUANTS RADIOACTIFS D'EAUX RÉSIDUAIRES

(30) Priorität: 20.03.2012 DE 102012204415
(43) Veröffentlichungstag der Anmeldung: 28.01.2015
(73) Patentinhaber: AREVA GmbH, 91052 Erlangen (DE)
(72) Erfinder: SEMPERE-BELDA, Luis, 91052 Erlangen (DE); GASSEN, Rainer, 90765 Fürth (DE); ZEILER, Bertram, 96135 Bischberg (DE); MOREIRA DO AMARAL, Jose Pedro, 90419 Nürnberg (DE)
(74) Vertreter: Schlögl, Markus
(86) Internationale Anmeldenummer: PCT/EP2013/055779
(87) Internationale Veröffentlichungsnummer: WO 2013/139835

(56) Entgegenhaltungen:
- EP-A1- 0 240 985
- DE-A1- 3 007 716
- DE-A1- 3 321 069
- GB-A- 2 005 655
- GB-A- 2 123 203
- RU-C2- 2 250 521
- US-A1- 2009 159 532

## Beschreibung

Die Erfindung betrifft ein Verfahren zur Entfernung radioaktiver Verunreinigungen aus Abwässern, die zum Einen bei der Dekontamination des Kühlkreislaufs von Kernreaktoren bzw. von Teilen davon und zum Anderen beim Betrieb eines Kernreaktors anfallen. Im Reaktorkühlmittel befinden sich oft radioaktive Substanzen sowohl in gelöster als auch in kolloidaler oder Partikelform. Bei der Dekontamination werden auf den Oberflächen der aus Metallen bestehenden Komponenten des Kühlkreislaufs vorhandene Oxidschichten abgelöst, wobei anorganische und/oder organische Säuren eingesetzt werden, die mit Metallionen aus der Oxidschicht, beispielsweise Eisen-II- oder Eisen-III-Ionen, wasserlösliche Komplexe bilden. Im Zuge der Dekontamination reichert sich die Dekontaminationslösung mit komplex gelösten Metall-Kationen und auch Anionen an. Spätestens am Ende der Dekontamination werden die in Lösung gegangenen Bestandteile der Oxidschicht, unter denen sich auch Radionuklide befinden, entfernt, indem das Abwasser bzw. die Dekontaminationslösung über Ionentauscher geführt wird. Eventuell noch im Abwasser vorhandene organische Substanzen, beispielsweise ein nicht verbrauchter Rest einer Dekontaminationssäure wie Oxalsäure, können gegebenenfalls beispielsweise durch eine Oxidationsbehandlung unter Bestrahlung mit UV-Licht zu Kohlendioxid und Wasser abgebaut werden.

Das am Ende einer Dekontamination vorliegende Abwasser ist daher in chemischer Hinsicht relativ rein. Es sind aber trotz der Ionentauscher-Behandlung vielfach noch radioaktive Verunreinigungen vorhanden, so dass eine Abgabe des Abwassers in die Umgebung nicht möglich ist. Gleiches trifft für Reaktorkühlmittel zu, das von Haus aus radioaktiv belastet ist. Ein Abwasser der genannten Art wird daher, wenn es in die Umgebung abgegeben oder in gereinigter Form z.B. wieder verwendet werden soll, üblicherweise einer Verdampfung unterzogen. Die Dampfphase bzw. das daraus durch Abkühlung entstehende Kondensat ist praktisch frei von Radioaktivität. Bei der Dekontamination eines Kühlmittelkreislaufs fallen einige Tonnen Abwasser an, so dass der Zeit- und Energieaufwand für das Verdampfen erheblich sind und entsprechende Kosten verursachen. Mit hohen Kosten sind auch die Verfestigung und die Endlagerung des Verdampfungsrückstands verbunden.

RU 2,250,521 offenbart ein Verfahren zur Dekontamination radioaktiv verunreinigter Abwässer durch Erzeugen eines Mn02-Niederschlags. In EP 0240985 wird eine Mischung aus Aluminium Carboxymethylcellulose und Mn02 vom Wasser als Niederschlag abgetrennt.

Aufgabe der Erfindung ist es, ein Verfahren der eingangs genannten Art anzugeben, das einfacher und mit geringerem Zeit-, Energie-, und Kostenaufwand durchführbar ist.

Diese Aufgabe wird gemäß Anspruch 1 mit einem Verfahren gelöst, bei dem in dem Abwasser mit Hilfe diesem zugesetzter Permanganationen als Oxidationsmittel und einem oder mehreren in dem Abwasser enthaltenen und/oder zudosierten Reduktionsmitteln aus der Gruppe organische und zu Wasser oxidierbare Reduktionsmittel ausschließlich ein MnO₂-Niederschlage erzeugt wird, wobei dieser von dem Abwasser abgetrennt wird. Bei diesem Verfahren ist zunächst vorteilhaft, dass außer dem Oxidationsmittel und dem Reduktionsmittel keine weiteren Zusatzstoffe wie Salze, Säuren oder Basen erforderlich sind, welche die Masse MnO₂-Niederschlags, also die Menge an zu entsorgendem Abfall erhöhen würden.

Bei der Bildung und der Sedimentation des MnO₂-Niederschlags bindet dieser, wie sich in überraschender Weise zeigte, selbst dann noch Radioaktivität, wenn diese nur in sehr geringer Konzentration im Abwasser vorhanden ist, was bei im Betrieb anfallenden Abwässern und bei verbrauchten Dekontaminationslösungen der Fall ist. Die radioaktiven Verunreinigungen werden zusammen mit dem Niederschlag aus dem Abwasser entfernt. Die Aktivitätswerte des Abwassers können auf diese Weise so weit abgesenkt werden, dass eine Entsorgung in die Umwelt oder eine Wiederverwertung beispielsweise im Kernkraftwerk unbedenklich sind. Die Radioaktivität des Abwassers beruht auf beispielsweise kolloidal gelösten, Alpha-Nuklide wie Am-241 oder auch Gamma-Nuklide wie Co-60 enthaltenden Partikel mit einer Größe im Nanometerbereich, die bei der Reinigung des Abwassers im Zuge der Dekontamination des Kühlkreislaufs mit Ionentauschern nicht zurückgehalten wurden. Als Träger der Radioaktivität kommen aber auch gelöste Nuklid-Kationen in Frage. Die kolloidal gelösten Partikel werden vermutlich adsorptiv an die Niederschläge gebunden, was auch für Ionen zutreffen dürfte und/oder in Hohlräume der Niederschläge eingeschlossen.

Für den in Rede stehenden Reinigungseffekt ist es vorteilhaft, wenn solche Reaktionspartner gewählt werden, die möglichst voluminöse Niederschläge ergeben, was in besonders ausgeprägtem Maße bei Braunstein- bzw. MnO₂-Nierderschlägen der Fall ist. Bei der Reaktion mit einem Reduktionsmittel der in Rede stehenden Art wird das Mangan, das im Permanganation in der Oxidationsstufe +VII vorliegt in die Oxidationsstufe +IV überführt, wobei das schwerlösliche, Mangandioxid (Braunstein) entsteht. Dieses bildet lockere, von wassergefüllten Hohlräumen durchsetzte aufgelockerte Ionenaggregate, die besonders gut kolloidal gelöste Partikel und auch Ionen binden können. Ein weiteres erfindungswesentliches Merkmal ist, dass ausschließlich MnO₂-Niederschläge erzeugt werden. Dies wird dadurch erreicht, dass in dem zu behandelnden Abwasser außer der als Reduktionsmittel dienenden wenigstens einen organischen Substanz oder einem zu Wasser oxidierbaren Reduktionsmittel keine Agentien vorhanden sind bzw. zugegeben werden, welche mit Mn-IV einen Niederschlag bilden und dadurch die später zu deponierende bzw. zu entsorgende Menge an radioaktivem Niederschlag erhöhen würde. Bei der Oxidation mit Hilfe von Permanganationen werden organischen Reduktionsmittel zu Kohlendioxid und Wasser zersetzt, während aus den anderen erwähnten Reduktionsmitteln nur Wasser entsteht.

Besonders vorteilhaft bei dem erfindungsgemäßen Verfahren ist der Einsatz eines organischen Reduktionsmittels, weil sich dabei die Möglichkeit ergibt, dass dieses entweder zu organischen Bruchstücken, die nach der Durchführung der Fällung beispielsweise mit Hilfe von UV-Strahlung weiter abgebaut werden können, oder gleich zu Kohlendioxid und Wasser oxidiert wird. Das dem Abwasser zugesetzte organische Reduktionsmittel erhöht somit die Menge des Niederschlages nicht, was andernfalls zu einem erhöhten Aufwand bei der Verfestigung und Entsorgung des Niederschlags führen würde.

Hinsichtlich der Reduzierung des zu entsorgenden Abfalls, also der Menge an Feststoffen, die nach deren Abtrennen aus der flüssigen Phase übrig bleibt, ist es vorteilhaft wenn nicht ein Salz der Permangansäure wie KMn04, sondern Permangansäure (HMn04) als Oxidationsmittel eingesetzt wird. Dadurch wird wegen des Fehlens von Kaliumionen die Abfallmenge weiter reduziert. Außerdem ist eine Entfernung von gelösten Kaliumionen aus dem Abwasser durch Ionentausch nicht erforderlich.

Bei der Reinigung einer verbrauchten Dekontaminationslösung werden vorzugsweise als Reduktionsmittel Verbindungen verwendet, die auch bei der Dekontamination des Kühlkreislaufs eingesetzt werden bzw. einsetzbar, also zugelassen sind. Mit dieser Vorgehensweise wird der Vorteil erzielt, dass hinsichtlich der Entsorgung der vom Abwasser abgetrennten Niederschläge keine zusätzlichen Qualifizierungsmaßnahmen, beispielsweise Materialverträglichkeitsuntersuchungen, erforderlich sind, da Abfälle mit diesen Stoffen auch im Zuge der Dekontamination anfallen. Beispiele für solche organische Reduktionsmittel sind Oxalsäure und Ameisensäure. Diese werden vom Permanganaten und Permangansäure zu Kohlendioxid und Wasser reduziert. Ein weiteres Reduktionsmittel, für das der o.g. Vorteil zutrifft, ist z.B. Wasserstoffperoxid.

Bei einer weiteren bevorzugten Verfahrensvariante werden die miteinander reagierenden Verbindungen, also Permanganationen und organisches Reduktionsmittel, in stöchiometrischen Mengen zugegeben, d.h. jeweils so viel, dass bei der Reaktion die zugesetzten Mengen vollständig oder zumindest annähernd vollständig verbraucht werden. Somit verbleibt in dem Abwasser praktisch kein Überschuss, welcher einer weiteren Verwendung des Abwassers entgegenstehen könnte. Um die Eigenschaften der gebildeten Braunsteinflocken zu beeinflussen, kann es vorteilhaft sein, das Reduktionsmittel mit einem geringen Überschuss gegenüber dem Oxidationsmittel einzusetzen. Die dabei gebildeten Niederschläge sind großflockiger und dadurch leichter filtrierbar.

Zur Bildung des Niederschlags ist es unerheblich, in welcher Reihenfolge die zur Bildung eines Niederschlages erforderlichen Verbindungen dem Abwasser zugesetzt werden. Denkbar ist auch eine gemeinsame bzw. gleichzeitige Dosierung. Die für die Fällung vorgesehene Menge an Reagenzien kann ebenso in einer oder mehreren Chargen zudosiert werden. Es kann jedoch von Vorteil sein, die Permanganationen, also z.B. Permangansäure dem bereits das Reduktionsmittel enthaltenden Abwasser zuzusetzen. Es hat sich bei dieser Vorgehensweise gezeigt, dass eine sonst zu beobachtende Anhaftung von Braunstein an den Wänden des Behälters, in dem die Fällung durchgeführt wird, weitgehend unterdrückt wird. Die sich bei der Fällung bildenden Braunstein-Flocken bleiben hauptsächlich in der Schwebe, was sie spätere Abtrennung aus dem Abwasser erleichtert. Bei einem bei einer Dekontamination anfallenden Abwasser ist oft noch ein Rest an unverbrauchter Dekontaminationssäure vorhanden. In einem solchen Fall ist es zweckmäßig, diesen Rest als Reduktionsmittel auszunutzen und so den Chemikalienbedarf für die MnO₂-Fällung zu reduzieren.

Im Falle einer bei der Dekontamination des Kühlkreislaufs eines Kernreaktors anfallenden verbrauchten Dekontaminationslösung ist es zweckmäßig, einen in der Lösung vorhandenen Rest an organischer Substanz, beispielsweise einer Dekontaminationssäure wie Oxalsäure als Reduktionsmittel für die MnO₂-Fällung auszunutzen.

Eine besonders bevorzugte Verfahrensvariante sieht vor, dass das Abwasser mindestens eine Stunde lang, besser jedoch 5 bis 30 Stunden lang z.B. durch Rühren in Bewegung in Bewegung gesetzt wird, um eine Sedimentation des Niederschlags zu verhindern, den Niederschlag also im Abwasser in der Schwebe zu halten. Diese Maßnahme bewirkt, dass sich die Partikel des Niederschlags zu größeren Gebilden zusammenlagern, was die Abtrennung des Niederschlags insbesondere durch Filtration erleichtert. Außerdem wird dadurch die Reinigungseffektivität insbesondere hinsichtlich z.B. kolloidal gelöster Nuklid-Partikel erhöht, da diese aufgrund ihres im Wesentlichen ungeladenen Charakters sich weniger leicht an den Niederschlag binden als dies bei ionalen Verunreinigungen der Fall ist.

Die durch eine der geschilderten Verfahrensvarianten entstandenen Niederschläge werden vorzugsweise durch Filtrieren aus dem Abwasser abgetrennt. Denkbar sind aber auch andere Methoden zum Abtrennen, beispielsweise eine Zentrifugation. Nach der Abtrennung wird der Niederschlag, um die zu entsorgende Masse zu verringern, getrocknet.

In der untenstehenden Tabelle ist das Ergebnis eines Versuches wiedergegeben, bei dem die Radioaktivität einer Abwasser-Probe (500 ml) mit Hilfe eines durch eine RedOx-Reaktion erzeugten Niederschlags verringert wird. Die Abwasser-Probe stammt aus einer Dekontaminationslösung, mit der ein Dampferzeuger eines Druckwasser-Reaktors primärseitig dekontaminiert wurde. Die Dekontaminationslösung wurde bereits kraftwerksseitig mit Ionentauschern gereinigt. Dennoch wurde nochmals eine Reinigung mit einem Labor-Mischbett-Ionentauscher vorgenommen, um zu testen, wie weit unter den sauberen Laborbedingungen eine Absenkung der Aktivität, speziell wurde die Alpha-Aktivität betrachtet, möglich ist. Die entsprechenden auf einzelne Alpha-Nuklide bezogenen Aktivitätswerte sind der untenstehenden Tabelle zu entnehmen.

Die Fällung erfolgte bei einer Temperatur des Abwassers von 25°C mit Permangansäure und Oxalsäure in stöchiometrischen Mengen, wobei nach Zugabe der genannten Reagenzien die Probe 20 Stunden lang gerührt und dabei der MnO₂-Niederschlag in dem Abwasser in der Schwebe gehalten wurde. Danach wurde der Niederschlag abfiltriert.

| | Ausgangsprobe | Nach Ionentausch | Nach MnO₂-Fällung |
|---|---|---|---|
| Gesamt-α-Aktivität | 3,23E+05 Bq | 3,21E+05 Bq | 3,39E+03 Bq |

Während mit dem im Labor vorgenommenen Ionentausch nur noch eine geringfügige Aktivitätsabsenkung erreicht werden konnte, zeigte der Fällungsschritt eine deutliche Reduzierung der Summen-Aktivität etwa um den Faktor 100 bereits bei einem einzigen Behandlungsschritt. Die Behandlung kann bei Bedarf mehrmals wiederholt werden, bis der gewünschte Reinigungsgrad erreicht wird.

Die Mengen der zur Fällung dem Abwasser zugesetzten Reagenzien hängt ganz allgemein davon ab, welche Menge an Niederschlägen erzeugt werden soll. Im Falle von Permangansäure oder Kaliumpermanganat liegt die erforderliche Menge im Bereich von 10 mg/l bis 50 g/l, wobei aber meist in einem Bereich von 100 mg/l bis 1000 mg/l gearbeitet werden kann. Beim vorliegenden Versuch wurden 160 mg Permangansäure und 255 mg Oxalsäure-Dihydrat zudosiert und zwar in zwei Chargen mit der jeweils der Hälfte der angegebenen Menge. Die Durchführung der Fällung ist generell nicht nur bei Raumtemperatur (25°C), sondern auch bei erhöhten Temperaturen bis 100°C möglich, falls eine solche Temperatur für die jeweilige Reaktion förderlich ist.

## Patentansprüche

1. Verfahren zur Entfernung radioaktiver Verunreinigungen aus Abwässern, die bei der Dekontamination des Kühlkreislaufs von Kernreaktoren oder von Teilen davon oder beim Betrieb eines Kernreaktors anfallen, bei dem das Abwasser zur Entfernung in ihm enthaltener Metallionen zunächst über Ionentauscher geführt wird, und dann in dem Abwasser mit Hilfe diesem zugesetzter Permangansäure als Oxidationsmittel und einem oder mehreren in dem Abwasser enthaltenen und/oder zudosierten Reduktionsmittel aus der Gruppe organische Reduktionsmittel und zu Wasser oxidierbare Reduktionsmittel ausschließlich ein MnO₂-Niederschlag erzeugt wird und außer dem Oxidationsmittel und dem Reduktionsmittel keine weiteren Zusatzstoffe zugesetzt werden, wobei der MnO₂-Niederschlag von dem Abwasser abgetrennt wird.

2. Verfahren nach Anspruch 1, **dadurch gekennzeichnet, dass** bei der Reinigung eines bei der Dekontamination anfallenden Abwassers als Reduktionsmittel Verbindungen verwendet werden, die auch bei der Dekontamination des Kühlkreislaufs eingesetzt wurden.

3. Verfahren nach einem der vorhergehenden Ansprüche, **dadurch gekennzeichnet, dass** Oxalsäure und/oder Ameisensäure als Reduktionsmittel verwendet werden.

4. Verfahren nach einem der vorhergehenden Ansprüche, **dadurch gekennzeichnet, dass** dem Abwasser ein Reduktionsmittel zugesetzt wird, das ausschließlich zu Wasser oxidiert wird.

5. Verfahren nach Anspruch 4, **gekennzeichnet durch** die Verwendung von Wasserstoffperoxid.

6. Verfahren nach einem der vorhergehenden Ansprüche, **dadurch gekennzeichnet, dass** Permangansäure und organisches Reduktionsmittel in stöchiometrischen Mengen zugegeben werden.

7. Verfahren nach einem der Ansprüche 1 bis 5, **dadurch gekennzeichnet, dass** das Reduktionsmittel mit einem Überschuss gegenüber dem Oxidationsmittel zudosiert wird.

8. Verfahren nach einem der vorhergehenden Ansprüche, **dadurch gekennzeichnet, dass** das Abwasser in Bewegung versetzt wird, um den MnO₂-Niederschlag in der Schwebe zu halten.

9. Verfahren nach Anspruch 8, **dadurch gekennzeichnet, dass** der MnO₂-Niederschlag mindestens eine Stunde im Abwasser in der Schwebe gehalten wird.

10. Verfahren nach Anspruch 9, **dadurch gekennzeichnet, dass** der Niederschlag 5 Stunden bis 30 Stunden in der Schwebe gehalten wird.

11. Verfahren nach einem der vorhergehenden Ansprüche, **dadurch gekennzeichnet, dass** der MnO₂-Niederschlag durch eine Filtration und/oder Zentrifugation vom Abwasser abgetrennt wird.

12. Verfahren nach Anspruch 11, **dadurch gekennzeichnet, dass** der abgetrennte Niederschlag getrocknet wird.

## Claims

1. Method for removing radioactive impurities from waste water which accrues during the decontamination of the cooling circuit of nuclear reactors or of parts thereof or during the operation of a nuclear reactor, during which the waste water is guided via ion exchangers for the removal of metal ions contained in it, and then exclusively an MnO₂ precipitate is generated in the waste water with the aid of permanganic acid which is added to this as an oxidising agent and one or more reducing agents which are contained in or added to the waste water from the group of organic reducing agents and reducing agents which are able to be oxidised to water, and no further additives are added apart from the oxidising agent and the reducing agent, wherein the MnO₂ precipitate is separated from the waste water.

2. Method according to claim 1, **characterised in that**, in the purification of waste water accruing during decontamination, compounds are used as reducing agents which were also used during the decontamination of the cooling circuit.

3. Method according to one of the preceding claims, **characterised in that** oxalic acid and/or formic acid are used as reducing agents.

4. Method according to one of the preceding claims, **characterised in that** a reducing agent is added to the waste water, which is oxidised exclusively to water.

5. Method according to claim 4, **characterised by** the use of hydrogen peroxide.

6. Method according to one of the preceding claims, **characterised in that** permanganic acid and organic reducing agent are added in stoichiometric amounts.

7. Method according to one of claims 1 to 5, **characterised in that** the reducing agent is added with a surplus relative to the oxidising agent.

8. Method according to one of the preceding claims, **characterised in that** the waste water is set into motion in order to keep the MnO₂ precipitate in suspension.

9. Method according to claim 8, **characterised in that** the MnO₂ precipitate is held in suspension in the waste water for at least one hour.

10. Method according to claim 9, **characterised in that** the precipitate is held in suspension for 5 hours to 30 hours.

11. Method according to one of the preceding claims, **characterised in that** the MnO₂ precipitate is separated by filtration and/or centrifugation of the waste water.

12. Method according to claim 11, **characterised in that** the separated precipitate is dried.

## Revendications

1. Procédé pour éliminer des polluants radioactifs d'eaux résiduaires, qui apparaissent lors de la décontamination du circuit de refroidissement de réacteurs nucléaires ou de parties de celui-ci ou lors du fonctionnement d'un réacteur nucléaire, dans lequel les eaux résiduaires sont d'abord conduites sur des échangeurs d'ions pour éliminer les ions métalliques qu'elles contiennent, et on produit ensuite exclusivement un précipité de MnO₂ dans les eaux résiduaires à l'aide d'acide permanganique ajouté à celles-ci comme agent d'oxydation et d'un ou plusieurs agents réducteurs du groupe des agents réducteurs organiques contenus et/ou ajoutés par doses dans les eaux résiduaires et des agents réducteurs oxydables en eau, et on n'ajoute aucune autre substance d'addition, hormis l'agent d'oxydation et l'agent réducteur, dans lequel on sépare le précipité de MnO₂ des eaux résiduaires.

2. Procédé selon la revendication 1, **caractérisé en ce que**, lors du nettoyage d'eaux résiduaires produites lors de la décontamination, on utilise comme agent réducteur des composés, qui ont également été utilisés lors de la décontamination du circuit de refroidissement.

3. Procédé selon l'une quelconque des revendications précédentes, **caractérisé en ce que** l'on utilise l'acide oxalique et/ou l'acide formique comme agent réducteur.

4. Procédé selon l'une quelconque des revendications précédentes, **caractérisé en ce que** l'on ajoute aux eaux résiduaires un agent réducteur, qui s'oxyde exclusivement en eau.

5. Procédé selon la revendication 4, **caractérisé par** l'utilisation de peroxyde d'hydrogène.

6. Procédé selon l'une quelconque des revendications précédentes, **caractérisé en ce que** l'on ajoute de l'acide permanganique et un agent réducteur organique en quantités stoechiométriques.

7. Procédé selon l'une quelconque des revendications 1 à 5, **caractérisé en ce que** l'on dose l'ajout d'agent réducteur en excès par rapport à l'agent d'oxydation.

8. Procédé selon l'une quelconque des revendications précédentes, **caractérisé en ce que** l'on met les eaux résiduaires en mouvement, afin de maintenir le précipité de MnO₂ en suspension.

9. Procédé selon la revendication 8, **caractérisé en ce que** l'on maintien le précipité de MnO₂ au moins une heure en suspension dans les eaux résiduaires.

10. Procédé selon la revendication 9, **caractérisé en ce que** l'on maintient le précipité en suspension pendant 5 heures à 30 heures.

11. Procédé selon l'une quelconque des revendications précédentes, **caractérisé en ce que** l'on sépare le précipité de MnO₂ des eaux résiduaires par un filtrage et/ou une centrifugation.

12. Procédé selon la revendication 11, **caractérisé en ce que** l'on sèche le précipité séparé.
